# FASCICULE DE BREVET EUROPEEN

(11) **EP 1 767 025 B1**
(45) Date de publication et mention de la délivrance du brevet: **26.09.2007**
(21) Numéro de dépôt: 05757067.3
(22) Date de dépôt: 13.04.2005
(51) Int. Cl.: H04Q 7/28

(54) **PROCEDE POUR ETABLIR UNE CONNEXION D URGENCE DANS UN RESEAU LOCAL SANS FIL**
VERFAHREN ZUR HERSTELLUNG EINER NOTVERBINDUNG IN EINEM LOKALEN DRAHTLOSEN NETZWERK
METHOD FOR ESTABLISHING AN EMERGENCY CONNECTION IN A LOCAL WIRELESS NETWORK

(30) Priorité: 19.04.2004 FR 0404090
(43) Date de publication de la demande: 28.03.2007
(73) Titulaire: Alcatel Lucent, 75008 Paris (FR)
(72) Inventeur: LE CREFF, Michel, F-95450 Vigny (FR); GASS, Raymond, F-67150 Bolsenheim (FR)
(74) Mandataire: Sciaux, Edmond
(86) Numéro de dépôt international: PCT/FR2005/000890
(87) Numéro de publication internationale: WO 2005/109930

(56) Documents cités:
- WO-A-03/009627
- WO-A-03/030445
- WO-A-03/088547
- US-A1- 2003 119 481
- US-A1- 2004 073 793

## Description

L'invention concerne un procédé permettant à l'usager d'un terminal téléphonique sans fil, destiné à être relié à un réseau local sans fil par exemple de type IEEE 802.11, d'établir une connexion d'urgence dans un réseau local, pour téléphoner à un centre de secours, même lorsque cet usager n'a pas de droit d'accès au réseau local sans fil qui dessert le lieu où il est à l'instant où il a besoin de secours.

Dans les entreprises, il est de plus en plus courant d'utiliser un téléphone portable sans fil se connectant, par une liaison radio de type IEEE 802.11, à un réseau local informatique et téléphonique appartenant à une entreprise. Certains assistants numériques personnels et certains ordinateurs personnels offrent aussi cette fonction téléphonique.

L'accès à un réseau local d'entreprise est généralement restreint à certains utilisateurs qui sont des employés de cette entreprise. Quand l'utilisateur d'un tel terminal est dans les locaux de l'entreprise qui l'emploie, il a un droit d'accès au réseau local, qui lui permet de téléphoner en toutes circonstances. Par contre, ce même utilisateur ne peut pas téléphoner quand il est dans les locaux d'une autre entreprise, parce qu'il ne dispose pas d'un droit d'accès dans le réseau local de cette autre entreprise. En particulier, il ne peux pas téléphoner à un centre de secours avec son terminal habituel, sauf si celui-ci est bi-mode, c'est à dire permettant aussi d'accéder à un réseau public de radio-téléphonie, tel qu'un réseau GSM.

Dans les réseaux radio-téléphoniques publiques, notamment les réseaux de type GSM, un procédé connu permet à l'usager d'un terminal radio-téléphonique d'établir une connexion d'urgence dans ce réseau, pour téléphoner à un centre de secours, même lorsque cet usager n'a pas de droit d'accès au réseau qui couvre l'endroit où il est ; et même s'il n'y a aucune carte SIM (Module d'identification de l'utilisateur) dans son terminal. Ce procédé connu consiste à autoriser un usager à accéder à un centre de commutation du service mobile, via une station de base et un contrôleur de stations de base, avant même que le terminal ait dû satisfaire à la procédure d'authentification de cet usager. Le centre de commutation du service mobile reçoit donc le numéro demandé et peut constater qu'il s'agit d'un numéro d'urgence. Dans ce cas, il ne déclenche pas la procédure d'authentification mais il établit la connexion demandée.

Ce procédé n'est pas transposable dans un réseau de type IEEE 802.11 parce que, dans ce type de réseau, tous les procédés actuels d'établissement d'une connexion consistent à interdire a priori aux points d'accès radio d'établir une connexion entre un terminal et le réseau, avant que la procédure d'authentification soit satisfaite, sauf une connexion temporaire avec un serveur d'authentification, pour pouvoir réaliser cette procédure d'authentification.

US2004/0073793-A1 décrit un procédé permettant à l'usager d'un terminal téléphonique sans fil d'établir une connexion dans un réseau local, comportant un serveur d'authentification, dans lequel l'usager d'un terminal téléphonique sans fil qui n'a pas de droit d'accès à un réseau local ne peut pas établir une connexion d'urgence dans le même réseau.

Le but de l'invention est de proposer un procédé permettant à l'usager d'un terminal téléphonique sans fil d'établir une connexion d'urgence dans un réseau local sans fil, pour téléphoner à un centre de secours, même lorsque cet usager n'a pas de droit d'accès à ce réseau local et que le procédé d'établissement d'une connexion dans ce réseau interdit a priori aux points d'accès radio d'établir une connexion entre un terminal et le réseau, avant que la procédure d'authentification soit satisfaite.

L'objet de l'invention est un procédé permettant à l'usager d'un terminal téléphonique sans fil d'établir une connexion d'urgence dans un réseau local, comportant un serveur d'authentification, même lorsque cet usager n'a pas de droit d'accès à ce réseau local ; caractérisé en ce qu'il consiste, quand l'usager a composé un numéro de téléphone d'urgence, à :
- reconnaître ce numéro comme numéro d'urgence et envoyer alors, du terminal à un point d'accès radio du réseau, un message de démarrage ;
- envoyer du point d'accès au terminal en réponse du message de démarrage un message demandant au terminal son identité ;
- envoyer alors du terminal au point d'accès du réseau un message contenant l'identité du terminal et une indication signifiant que c'est un appel d'urgence ;
- transmettre du point d'accès au serveur d'authentification un message contenant ladite information d'identité et une indication signifiant que c'est un appel d'urgence ;
- reconnaître, dans le serveur d'authentification, que ce message contient une indication signifiant que c'est un appel d'urgence, et envoyer alors un message d'acceptation à ce terminal, via le point d'accès ;
- reconnaître ce message d'acceptation lors de son transit via le point d'accès, et valider alors un port du point d'accès permettant à ce terminal d'établir une connexion d'urgence à travers le réseau local.

L'invention a aussi pour objet un terminal téléphonique sans fil permettant à son usager d'établir une connexion d'urgence dans un réseau local sans fil, caractérisé en ce qu'il comporte de moyens pour :
- reconnaître un numéro comme numéro d'urgence quand l'usager a composé un numéro de téléphone d'urgence , et envoyer alors, du terminal à un point d'accès radio du réseau, un message de démarrage ;
- recevoir du point d'accès du réseau un message demandant au terminal son identité ;
- envoyer alors, du terminal au point d'accès, un message contenant l'identité du terminal, et une indication signifiant que c'est un appel d'urgence, ce message étant destiné à un serveur d'authentification ;
- recevoir un message d'acceptation envoyé par le serveur d'authentification via ce point d'accès, et destiné à valider classiquement un port d'un point d'accès afin de permettre au terminal d'établir une connexion d'urgence à travers le réseau local ;
- et envoyer alors à ce point d'accès un message de demande d'établissement d'une connexion d'urgence à travers le réseau local.

L'invention a aussi pour objet un serveur d'authentification permettant à l'usager d'un terminal téléphonique sans fil d'établir une connexion d'urgence dans un réseau local ; caractérisé en ce qu'il comporte des moyens pour :
- recevoir, via un point d'accès radio, un message provenant d'un terminal et contenant l'identité de ce terminal et une indication signifiant que c'est un appel d'urgence ;
- reconnaître dans ce message l'indication signifiant que c'est un appel d'urgence, et envoyer alors au terminal, via ce point d'accès, un message d'acceptation, destiné à valider classiquement un port de ce point d'accès afin de permettre au terminal d'établir une connexion d'urgence à travers le réseau local.

L'invention sera mieux comprise et d'autres caractéristiques apparaîtront à l'aide de la description ci-dessous et des figures l'accompagnant :
- La figure 1 représente le schéma d'un exemple de réseau local de type IEEE 802.11, dans lequel on peut mettre en oeuvre le procédé selon l'invention ;
- La figure 2 représente un chronogramme illustrant le procédé connu selon les normes IEEE 802.11 et IEEE 802.1x pour authentifier un terminal puis établir une connexion ;
- La figure 3 représente un chronogramme illustrant le procédé selon l'invention pour authentifier un terminal puis établir une connexion d'urgence sans authentifier ce terminal.
Le réseau local IPN de type IEEE 802.11 représenté sur la **figure 1** comporte :
- un commutateur Ethernet ESW ;
- un serveur d'authentification AS, du type RADIUS (Remote Authentication Dial In Service) par exemple, relié à un port du commutateur Ethernet ESW ;
- et des points d'accès radio AP1, AP2, AP3, reliés respectivement à des ports du commutateur Ethernet ESW ;
Le commutateur Ethernet ESW est relié à un commutateur téléphonique privé, IPBX, par le biais d'une passerelle, GW. Il permet d'établir des communications téléphoniques dans le réseau local IPN. Ce commutateur téléphonique IPBX est relié aussi à un réseau public de téléphonie, PSTN.

Des terminaux téléphoniques sans fil T1, T2, T3, ..., et des ordinateurs portables PC1, PC2, ... sont reliés chacun à un des points d'accès radio AP1, AP2, AP3, par des liaisons radio IEEE 802.11 g par exemple.

L'authentification est faite en mettant en oeuvre par exemple le protocole appelé EAP (Extensible Authentication Protocol) décrit dans le document IEEE Std 802.1x - 2001, pour faire communiquer une entité de protocole (Supplicant PAE) qui demande une authentification, avec un serveur d'authentification (Authentication Server), via une entité de protocole (Authenticator PAE) qui réalise l'authentification. Ce protocole EAP peut supporter divers procédés d'authentification. On considérera ici à titre d'exemple une authentification par mot de passe à usage unique, mais le procédé selon l'invention peut être appliqué quel que soit le procédé d'authentification utilisé dans le cadre de la norme IEEE 802.11. A titre d'exemple, on considérera l'authentification du terminal téléphonique T1.

Chaque terminal téléphonique T1, T2, T3, ..., et chaque ordinateur personnel PC1, PC2, ... du réseau comporte des moyens logiciels permettant à un port d'un point d'accès AP1, AP2, AP3, ... d'exécuter les procédures d'authentification de ce terminal. Ces moyens logiciels exécutent une entité de protocole référencée SPAE (Supplicant Port Acess Entity, selon la terminologie de la norme IEEE 802.1x). Chaque point d'accès AP1, AP2, AP3, ... comporte des moyens logiciels pour exécuter une entité de protocole associée à un port, cette entité étant destinée à retransmettre une demande d'authentification vers le serveur d'authentification AS. Cette entité est référencée APAE (Authenticator Port Acess Entity selon la terminologie de la norme IEEE 802.1x). La norme IEEE 802.1x définit un format d'encapsulation des messages du protocole EAP, pour les transmettre sur un réseau local.

Cette encapsulation, appelée EAPOL, est utilisée par exemple pour toutes les communications entre le terminal T1 et le point d'accès AP1. Ce dernier reformate un message provenant du terminal T1 avant de le retransmettre au serveur d'authentification AS, conformément au protocole RADIUS. Le point d'accès AP1 valide ou inhibe le port susceptible de relier le terminal T1 au réseau local, mais il n'interfère pas avec les échanges de messages entre le terminal T1 et le serveur d'authentification AS, ce qui permet d'utiliser un serveur d'authentification AS distant du point d'accès AP1. Le point d'accès AP1 est initialisé de façon que le ce port est inhibé. Selon la norme IEEE 802.1x, le point d'accès AP1 valide ce port lorsqu'il constate, en surveillant les échanges de messages entre le terminal T1 et le serveur d'authentification AS, que le terminal T1 a été authentifié par le serveur AS.

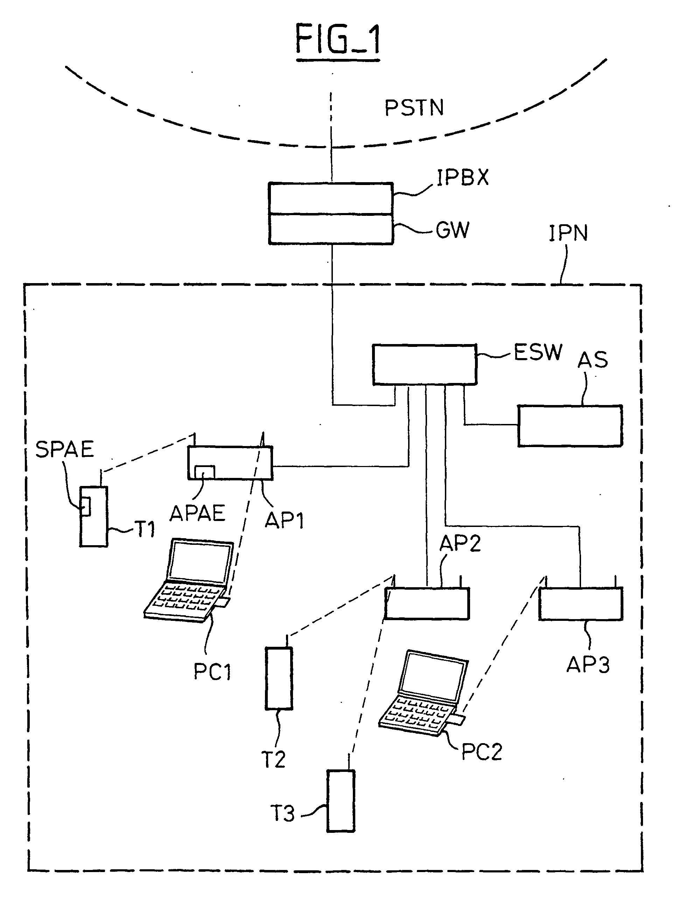

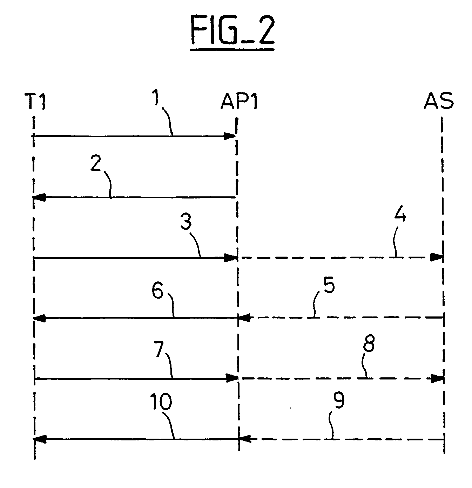

La **figure** 2 représente un chronogramme illustrant le procédé connu selon les normes IEEE 802.11 et IEEE 802.1x pour authentifier un terminal puis établir une connexion. Il est mis en oeuvre dans le réseau représenté sur la figure 1 en utilisant des terminaux T1, T2, T3, ... , des points d'accès AP1, AP2, AP3,... et un serveur d'authentification AS classiques. La figure 2 représente les échanges de messages, conformément à la norme IEEE 802.1x, dans le cas où le terminal T1 est authentifié avec succès. Le procédé d'authentification décrit est un exemple seulement, la norme IEEE 802.1 x supportant de nombreux autres procédés d'authentification. Cet échange de message a lieu lorsque le terminal est mis sous tension, ou lorsque le terminal entre sous la couverture radio d'un autre point d'accès. Dans le cas le plus courant, l'authentification est faite bien avant la demande d'établissement d'une communication.

Etape 1 : Lorsqu'il est mis sous tension, le terminal T1 envoie au point d'accès AP1 un message de démarrage, appelé EAPOL-Start selon la terminologie de la norme IEEE 802.1x.

Etape 2 : le point d'accès AP1 lui répond par un message demandant l'identité du terminal, ce message étant appelé EAP-Request / Identity.

Etape 3 : Le terminal T1 envoie au point d'accès AP1 un message de réponse contenant l'identité du terminal, ce message étant appelé EAP-Response / Identity.

Etape 4 : Le point d'accès AP1 reformate puis retransmet ce message de réponse au serveur d'authentification AS. Par contre, il ne laisse passer, pour le moment, aucun autre flux de données provenant du terminal T1.

Etape 5 : Le serveur d'authentification AS envoie au point d'accès AP1 un message de demande contenant un mot de passe à usage unique, appelé EAP-Request / OTP, OTP Challenge.

Etape 6 : Le point d'accès AP1 reformate puis retransmet ce message de demande au terminal T1.

Etape 7 : Le terminal T1 envoie au point d'accès AP1 un message de réponse, appelé EAP-Response / OTP, OTPpw.

Etape 8 : Le point d'accès AP1 reformate puis retransmet ce message de réponse au serveur d'authentification AS.

Etape 9 : Le serveur d'authentification AS vérifie le message de réponse émis par le terminal T1. Si la vérification est positive, il envoie au point d'accès AP1 un message d'acceptation, appelé EAP-Success. Ce message peut contenir des restrictions telles qu'un accès restreint à un réseau virtuel, sous-ensemble du réseau considéré, ou un ensemble de règles pare-feu.

Etape 10 : Le point d'accès prend connaissance de ce message d'acceptation, le reformate, puis le retransmet au terminal T1, et il valide le port qui permettra au terminal T1 de communiquer avec l'ensemble du réseau local, et notamment le commutateur téléphonique IPBX. Ensuite, le terminal attend un événement, par exemple que l'utilisateur demande l'établissement d'une communication téléphonique.

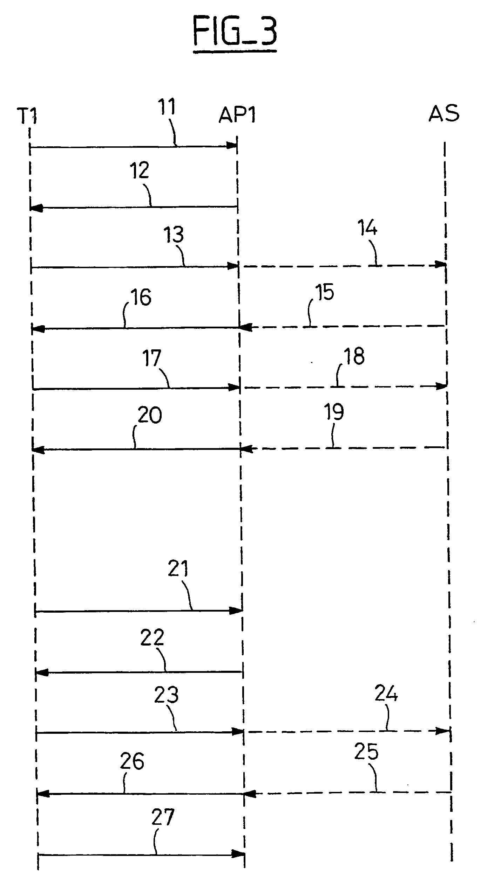

La **figure 3** représente un chronogramme illustrant le procédé selon l'invention pour établir une connexion d'urgence sans authentifier un terminal. Il est mis en oeuvre dans le réseau représenté sur la figure 1 en utilisant des terminaux T1, T2, T3, ... , et un serveur d'authentification AS dont les moyens logiciels respectifs ont été adaptés pour mettre en oeuvre le procédé selon l'invention. Les points d'accès AP1, AP2, AP3,... sont classiques, ils ne nécessitent pas de modification. Dans cet exemple, l'usager du terminal T1 n'a pas de droit d'accès dans le réseau IPN, mais il allume son terminal T1, pour établir une connexion d'urgence, alors qu'il est dans la zone de couverture radio du réseau IPN.

Etape 11 : Lorsqu'il est mis sous tension, le terminal T1 envoie au point d'accès AP1 un message de démarrage, appelé EAPOL-Start.

Etape 12 : Le point d'accès AP1 lui répond par un message demandant au terminal son identité, EAP-Request / Identity.

Etape 13 : Le terminal T1 envoie au point d'accès AP1 un message de réponse contenant l'identité du terminal, EAP-Response / Identity.

Etape 14 : Le point d'accès AP1 reformate puis retransmet ce message de réponse au serveur d'authentification AS. Par contre, il ne laisse passer, pour le moment, aucun autre flux de données provenant du terminal T1.

Etape 15 : Le serveur d'authentification AS envoie au point d'accès AP1 un message de demande contenant un mot de passe à usage unique, EAP- Request / OTP, OTP Challenge.

Etape 16 : Le point d'accès AP1 reformate puis retransmet ce message de demande au terminal T1.

Etape 17 : Le terminal T1 envoie au point d'accès AP1 un message de réponse, appelé EAP-Response / OTP, OTPpw.

Etape 18 : Le point d'accès AP1 reformate puis retransmet ce message de réponse au serveur d'authentification AS.

Etape 19 : Le serveur d'authentification AS vérifie le message de réponse émis par le terminal T1. La vérification est négative, il envoie donc au point d'accès AP1 un message de refus.

Etape 20 : Le point d'accès prend connaissance de ce message de refus, et il ne valide donc pas le port qui permettrait au terminal T1 de communiquer avec l'ensemble du réseau local, et notamment le commutateur téléphonique IPBX. Ensuite, le terminal attend un événement, par exemple que l'utilisateur demande l'établissement d'une communication téléphonique d'urgence.

Etape 21 : L'usager compose un numéro téléphonique d'urgence (tel que 112 en Europe, ou 911 aux USA). Le terminal T1 envoie alors au point d'accès AP1 le message de démarrage classique appelé EAPOL-Start. Ce message est déclenché par le fait que l'usager a composé, sur le clavier du terminal T1, ou par une touche spécialisée, le numéro de téléphone d'urgence et que ce numéro a été reconnu comme numéro d'urgence par le terminal T1.

Etape 22 : Le point d'accès AP1 lui répond par le message classique de demande, contenant une information d'identité, EAP-Request / Identity.

Etape 23 : Le terminal T1 envoie au point d'accès AP1 un message de réponse, d'un type nouveau, contenant ladite information d'identité et une indication signifiant que c'est un appel d'urgence. Par contre, le numéro de téléphone d'urgence (fiel que 112 en Europe, ou 911 aux USA) peut ne pas être transmis.

Etape 24 : Le point d'accès AP1 reformate puis retransmet ce message de réponse au serveur d'authentification AS.

Etape 25 : Le serveur d'authentification AS reconnaît dans le message l'indication signifiant que c'est un appel d'urgence. Le serveur d'authentification AS envoie alors au point d'accès AP1 un message d'acceptation, d'un type nouveau, contenant une indication signifiant que c'est une authentification temporaire, valable seulement pour la durée d'un appel d'urgence c'est à dire jusqu'à une opération de libération, initialisée par le centre de secours qui a répondu à l'appel d'urgence. Le terminal T1 perdra alors tous ses droits d'accès au réseau.

Etape 26 : Le point d'accès AP1 reformate puis retransmet ce message d'acceptation au terminal T1, et il valide le port qui permettra au terminal T1 de communiquer avec l'ensemble du réseau local, jusqu'à ce qu'il reçoive un message de libération, envoyé par le centre de secours qui a répondu à l'appel d'urgence.

Etape 27 : Le terminal T1 envoie au point d'accès AP1 un message de demande d'établissement d'une connexion téléphonique, mais ce message est d'un type particulier qui demande une connexion vers un centre de secours sans mentionner le numéro de téléphone d'urgence composé par l'usager (tel que 112 en Europe, ou 911 aux USA). Ce message sera acheminé par le réseau local jusqu'au commutateur IPBX, et c'est le commutateur IPBX qui composera un numéro de téléphone d'urgence. Ainsi il n'est pas possible d'utiliser ce procédé pour contourner l'authentification dans un but frauduleux.

Selon une variante de réalisation, le serveur d 'authentification peut être intégré à un point d'accès radio, au lieu d'être distant.

La portée de l'invention n'est pas limitée aux réseaux de type IEEE 802.11, elle peut être appliquée dans tout réseau où le procédé d'établissement d'une connexion dans ce réseau interdit a priori aux points d'accès radio d'établir une connexion entre un terminal et le réseau, avant que la procédure d'authentification soit satisfaite.

## Revendications

1. Procédé permettant à l'usager d'un terminal téléphonique sans fil (T1) d'établir une connexion d'urgence dans un réseau local (IPN), comportant un serveur d'authentification (AS), même lorsque cet usager n'a pas de droit d'accès à ce réseau local ; **caractérisé en ce qu'**il consiste, quand l'usager a composé un numéro de téléphone d'urgence, à :
- reconnaître ce numéro comme numéro d'urgence et envoyer (21) alors, du terminal (T1) à un point d'accès radio (AP1) du réseau, un message de démarrage ;
- envoyer (22) du point d'accès (AP1) au terminal (T1), en réponse au message de démarrage, un message demandant au terminal son identité ;
- envoyer (23) alors du terminal (T1) au point d'accès (AP1) du réseau un message contenant l'identité du terminal et une indication signifiant que c'est un appel d'urgence ;
- transmettre (24) du point d'accès (AP1) au serveur d'authentification (AS) un message contenant ladite information d'identité et une indication signifiant que c'est un appel d'urgence ;
- reconnaître (25), dans le serveur d'authentification (AS), que ce message contient une indication signifiant que c'est un appel d'urgence, et envoyer alors un message d'acceptation à ce terminal (T1), via le point d'accès (AP1) ;
- reconnaître (26) ce message d'acceptation lors de son transit via le point d'accès (AP1), et valider alors un port du point d'accès (AP1) permettant à ce terminal (T1) d'établir une connexion d'urgence à travers le réseau local.

2. Terminal téléphonique sans fil (T1) permettant à son usager d'établir une connexion d'urgence dans un réseau local sans fil (IPN), **caractérisé en ce qu'**il comporte de moyens pour :
- reconnaître un numéro comme numéro d'urgence quand l'usager a composé un numéro de téléphone d'urgence , et envoyer (21) alors, du terminal (T1) à un point d'accès radio (AP1) du réseau, un message de démarrage ;
- recevoir (22) du point d'accès (AP1) du réseau un message de réponse demandant au terminal son identité ;
- envoyer (23) alors, du terminal (T1) au point d'accès (AP1), un message contenant l'identité du terminal, et une indication signifiant que c'est un appel d'urgence, ce message étant destiné à un serveur d'authentification (AS) ;
- recevoir (26) un message d'acceptation envoyé par le serveur d'authentification (AS) via ce point d'accès (AP1), et destiné à valider classiquement un port d'un point d'accès (AP1) afin de permettre au terminal (T1) d'établir une connexion d'urgence à travers le réseau local ;
- et envoyer alors (27) à ce point d'accès (AP1) un message de demande d'établissement d'une connexion d'urgence à travers le réseau local.

3. Serveur d'authentification (AS) permettant à l'usager d'un terminal téléphonique sans fil (T1) d'établir une connexion d'urgence dans un réseau local ; **caractérisé en ce qu'**il comporte des moyens pour :
- recevoir (24), via un point d'accès radio (AP1), un message provenant d'un terminal (T1) et contenant l'identité de ce terminal et une indication signifiant que c'est un appel d'urgence ;
- reconnaître dans ce message l'indication signifiant que c'est un appel d'urgence, et envoyer (25) alors au terminal (T1), via ce point d'accès (AP1), un message d'acceptation, destiné à valider classiquement un port de ce point d'accès (AP1) afin de permettre au terminal (T1) d'établir une connexion d'urgence à travers le réseau local.

## Claims

1. Method enabling the user of a wireless telephone terminal (T1) to establish an emergency connection in a local network (IPN), including an authentication server (AS) even when this user does not have the right to access this local network, **characterised in that** it consists, when the user has entered an emergency telephone number, in:
- recognising this number as an emergency number and then sending (21) a start-up message from the terminal (T1) to a radio access point (API) of the network;
- sending (22) a message, which requests its identity of the terminal, from an access point (API) to the terminal (T1) in response to the start-up message;
- then sending (23) a message which contains the identity of the terminal and an indication signifying that it is an emergency call, from the terminal (T1) to the radio access point (API) of the network;
- transmitting (24) a message containing said identity information and an indication signifying that it is an emergency call from the access point (API) to the authentication server (AS);
- recognising (25), in the authentication server (AS), that this message contains an indication signifying that it is an emergency call, and then sending an acceptance message to the terminal (T1) via the access point (API), and;
- recognising (26) this acceptance message when in transit via the access point (API) and then validating a port of the access point (API) enabling the terminal (T1) to establish an emergency connection over the local network.

2. Wireless telephone terminal (T1) enabling its user to establish an emergency connection in a wireless local network (IPN), **characterised in that** it includes means for:
- recognising a number as an emergency number when the user has entered an emergency telephone number and then sending (21) a start-up message from the terminal (T1) to a radio access point (AP1) of the network;
- receiving (22) from the access point (AP1) of the network a response message requesting its identity of the terminal;
- then sending (23) from the terminal (T1) to the access point (AP1) a message containing the identity of the terminal and an indication signifying that this is an emergency call, this message being intended for an authentication server (AS);
- receiving (26) an acceptance message sent by the authentication server (AS) via this access point (AP1) and intended to validate conventionally a port of an access point (AP1) in order to enable the terminal (T1) to establish an emergency connection across the local network; and
- then sending (27) to this access point (AP1) a message requesting establishing of an emergency connection over the local network.

3. Authentication server (AS) enabling the user of a wireless telephone terminal (T1) to set up an emergency connection in a local network, **characterised in that** it includes means for:
- receiving (24) via a radio access point (AP1) a message coming from a terminal (T1) and containing the identification of that terminal and an indication signifying that it is an emergency call;
- recognising in this message the indication signifying that this is an emergency call and then sending (25) to the terminal (T1) via this access point (AP1) an acceptance message intended to validate conventionally a port of this access point (AP1) in order to enable the terminal (T1) to establish an emergency connection across the local network.

## Patentansprüche

1. Verfahren, das es dem Nutzer eines drahtlosen telefonischen Endgeräts (T1) ermöglicht, eine Notverbindung in einem lokalen Netzwerk (IPN) herzustellen, das einen Authentifizierungsserver (AS) enthält, und zwar sogar dann, wenn dieser Nutzer keine Zugangsberechtigung zu diesem lokalen Netzwerk hat; **dadurch gekennzeichnet, dass** es nachdem der Nutzer eine Notrufnummer gewählt hat darin besteht:
- diese Nummer als Notrufnummer zu erkennen und dann vom Endgerät (T1) zu einem Funkzugangspunkt (AP1) des Netzwerks eine Startmeldung zu schicken (21);
- als Antwort auf die Startmeldung vom Zugangspunkt (AP1) eine Meldung an das Endgerät (T1) zu schicken (22), in der das Endgerät nach seiner Identität gefragt wird;
- dann vom Endgerät (T1) eine Meldung an den Netzzugangspunkt (AP1) zu schicken (23), in der die Identität des Endgeräts und eine Angabe enthalten ist, die anzeigt, dass es sich um einen Notruf handelt;
- vom Zugangspunkt (AP1) aus eine Meldung an den Authentifizierungsserver (AS) zu übermitteln (24), welche diese Identitätsinformation und die Angabe, dahingehend, dass es sich um einen Notruf handelt, enthält;
- im Authentifizierungsserver (AS) zu erkennen (25), dass diese Meldung eine Angabe dahingehend enthält, dass es sich um einen Notruf handelt, und dann via den Zugangspunkt (AP1) eine Annahmemeldung an dieses Endgerät (T1) zu senden;
- diese Annahmemeldung bei ihrem Durchlaufen des Zugangspunktes (AP1) zu erkennen (26) und dann einen Port des Zugangspunktes (AP1) freizugeben, der es diesem Endgerät (T1) gestattet, eine Notverbindung durch das lokale Netzwerk herzustellen.

2. Drahtloses telefonisches Endgerät (T1), das es seinem Nutzer ermöglicht, eine Notverbindung in einem lokalen drahtlosen Netzwerk (IPN) herzustellen, **dadurch gekennzeichnet, dass** es Mittel enthält, um:
- eine Nummer als Notrufnummer zu erkennen, wenn der Nutzer eine Notrufnummer gewählt hat, und dann vom Endgerät (T1) zu einem Funkzugangspunkt (AP1) des Netzwerks eine Startmeldung zu schicken (21);
- vom Zugangspunkt (AP1) zum Netz eine Antwortmeldung zu empfangen (22), in der das Endgerät nach seiner Identität gefragt wird;
- dann vom Endgerät (T1) eine Meldung an den Zugangspunkt (AP1) zu schicken (23), in der die Identität des Endgeräts und eine Angabe enthalten ist, die anzeigt, dass es sich um einen Notruf handelt, wobei diese Meldung für einen Authentifizierungsserver (AS) bestimmt ist;
- eine vom Authentifizierungsserver (AS) via diesen Zugangspunkt (AP1) geschickte Annahmemeldung zu empfangen (26), die dazu bestimmt ist, herkömmlich einen Port eines Zugangspunktes (AP1) freizugeben, damit es dem Endgerät (T1) möglich wird, eine Notverbindung durch das lokale Netzwerk herzustellen;
- und dann an diesen Zugangspunkt (AP1) eine Meldung mit der Anforderung zur Herstellung einer Notverbindung durch das lokale Netzwerk zu schicken (27).

3. Authentifzierungsserver (AS), der es dem Nutzer eines drahtlosen telefonischen Endgeräts (T1) ermöglicht, eine Notverbindung in einem lokalen Netzwerk herzustellen; **dadurch gekennzeichnet, dass** Mittel enthalten sind, um:
- über einen Funkzugangspunkt (AP1) eine Meldung zu empfangen (24), die von einem Endgerät (T1) herkommt und die Identität dieses Endgeräts enthält sowie eine Angabe dahingehend, dass es sich um einen Notruf handelt;
- in dieser Meldung die Angabe dahingehend, dass es sich um einen Notruf handelt, zu erkennen, und dann über diesen Zugangspunkt (AP1) eine Annahmemeldung an das Endgerät (T1) zu schicken (25), die dazu bestimmt ist, herkömmlich einen Port dieses Zugangspunktes (AP1) freizugeben, um es dem Endgerät (T1) zu ermöglichen, eine Notverbindung durch das lokale Netzwerk herzustellen.
